(19) Europäisches Patentamt
European Patent Office
Office européen des brevets

(11) **EP 3 483 567 A1**

(12) **EUROPÄISCHE PATENTANMELDUNG**

(43) Veröffentlichungstag:
15.05.2019 Patentblatt 2019/20

(51) Int Cl.:
*G01D 5/48* (2006.01)

(21) Anmeldenummer: 17200617.3

(22) Anmeldetag: 08.11.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
80333 München (DE)

(72) Erfinder:
• **MEYER, Martin**
  90425 Nürnberg (DE)
• **ZETTNER, Jürgen**
  90587 Veitsbronn (DE)

(54) **WINKELSENSOR MIT RINGFÖRMIGEM HOHLLEITER ALS MASSVERKÖRPERUNG**

(57) In einem Grundkörper (4) ist ein Drehelement (5) gelagert ist, so dass das Drehelement (5) um eine Drehachse (6) rotierbar ist. Eine Anregungsschaltung (10) generiert ein Anregungssignal (A). Eine Teilerschaltung (11) führt das Anregungssignal (A) teilweise als Sendesignal (S) einer am Grundkörper (4) befestigten Sende- und Empfangsantenne (14) und teilweise als Basissignal (B) einer Auswertungsschaltung (12) zu. Der Winkelsensor (3) weist einen Hohlleiter (8) auf, der ringförmig um die Drehachse (6) umläuft. Die Sende- und Empfangsantenne (14) emittiert aufgrund des Sendesignals (S) in den Hohlleiter (8) eine elektromagnetische Welle (15a, 15b), die sich in dem Hohlleiter (8) in beide Richtungen ausbreitet. Das Drehelement (5) weist ein Abschlusselement (16) auf, das in den Hohlleiter (8) hineinragt und zumindest einseitig reflektierend ausgebildet ist, so dass auf der reflektierenden Seite des Abschlusselements (16) die dort eintreffende elektromagnetische Welle (15a) reflektiert wird und im Hohlleiter (8) zur Sende- und Empfangsantenne (14) zurückläuft. Die reflektierte Welle (18) wird von der Sende- und Empfangsantenne (14) empfangen. Ein dadurch generiertes Empfangssignal (E) wird der Auswertungsschaltung (12) zugeführt. Die Auswertungsschaltung (12) ermittelt durch Auswerten des Basissignals (B) und des Empfangssignals (E) innerhalb eines Auflösungsbereichs (β) eine Drehstellung (a) des Drehelements (5) relativ zu einer Referenzdrehstellung (a0).

FIG 4

**Beschreibung**

Die vorliegende Erfindung geht aus von einem Winkelsensor,

- wobei der Winkelsensor einen Grundkörper aufweist,
- wobei in dem Grundkörper ein Drehelement gelagert ist, so dass das Drehelement um eine Drehachse rotierbar ist.

Winkelsensoren sind für eine Vielzahl von Anwendungen erforderlich. Beispielsweise muss bei elektrischen Maschinen der mechanische Drehwinkel für Positionierungsaufgaben und als Feedback für die Stromregelung gemessen werden. Beispielsweise werden für Servoantriebe in der Regel optische, magnetische, induktive oder kapazitive Winkelsensoren verwendet. In vielen Fällen sind die Winkelsensoren eigenständige Bauteile, bei denen der Grundkörper des Winkelsensors mit einem Grundkörper der Maschine, deren Drehstellung erfasst werden soll, verbunden ist und das Drehelement des Winkelsensors mit einer rotierenden Welle der Maschine verbunden ist. In manchen Fällen sind die Winkelsensoren integrale Bauteile der Maschine.

Unabhängig davon, ob die eine oder die andere Vorgehensweise ergriffen wird, bestehen die Winkelsensoren immer aus einer Erfassungseinheit, welche eine Maßverkörperung abtastet. Die Erfassungseinheit ist auf dem Grundkörper des Winkelsensors angeordnet, die Maßverkörperung auf dem Drehelement des Winkelsensors. Es ist möglich, dass der Winkelsensor selbst die Drehstellung ermittelt und an eine Steuerung übergibt. Alternativ kann der Winkelsensor Rohsignale - beispielsweise Sinus- und Cosinussignale - weiterleiten, aus denen dann eine andere Einrichtung, beispielsweise die erwähnte Steuerung, die Drehstellung ermittelt.

Die bekannten Winkelsensoren weisen verschiedene Nachteile auf.

So sind beispielsweise optische hochgenaue Winkelsensoren kostenintensiv, da in der Regel eine hochgenaue Montage der Erfassungseinheit relativ zur Maßverkörperung erforderlich ist. Im Falle der Ausgestaltung als integrierter Winkelsensor ist ein derartiger Sensor schmutzanfällig und muss in aufwendiger Weise durch den Hersteller der Maschine gekapselt werden.

Die Forderung nach kleinen Latenzzeiten für eine Verwendung in der Regelung erfordert schnelle physikalische Meßprinzipien und Auswertungsverfahren.

Die Maßverkörperungen müssen für eine hohe Genauigkeit im Bereich von 18 Bit und mehr aufwendig gefertigt werden, meist in Mikrostrukturtechnik, da die Strukturgrößen mit zunehmender Genauigkeitsklasse immer kleiner werden. Dies gilt gleichermaßen für eine Ausgestaltung der Maßverkörperung als codiertes Multipol-Magnetrad oder Multipol-Zahnrad oder als induktive oder kapazitiv wirkende Leiterplattenstruktur oder optische Glas- oder Kunststoffscheibe mit transmissiv oder reflexiv abzutastenden Strukturen im Mikrometerbereich.

Weiterhin sollen die Maßverkörperungen immer kleiner werden, um den passiven Bauraum, der nicht dem eigentlichen Zweck der Maschine dient (beispielsweise dem Aufbringen eines Drehmoments), zu minimieren.

Herkömmliche Maßverkörperungen werden mittels einer Abtasteinheit abgetastet, in manchen Fällen auch mittels mehrerer Abtasteinheiten. Die Kodierungsspuren der Maßverkörperungen sind meist kleinräumig parallel, seriell oder als sogenannte Noniusspulen kreisförmig angeordnet.

Im Rahmen der linearen Abstandsmessung sind weiterhin Messverfahren und Messanordnungen bekannt, welche eine phasenmessende Radartechnik in einem Hohlleiter nutzen, um bei Positionierungsaufgaben Abstände von mehreren Metern mit einer Positionierungsauflösung von wenigen Mikrometern zu erfassen.

Rein beispielhaft kann auf die DE 10 2013 209 364 A1 und auf die DE 10 2013 202 765 A1 verwiesen werden. Derartige Messanordnungen umfassen einen Sensor zum Empfangen einer elektromagnetischen Welle und ein Führungsteil zum Führen der elektromagnetischen Welle. Das Führungsteil ist als länglicher Hohlleiter ausgebildet. Es besteht vorzugsweise aus Metall oder ist metallisch beschichtet. Das Führungsteil weist in Längsrichtung einen Schlitz auf, welcher der Führung der elektromagnetischen Welle dient. Die Auswertung des empfangenen Signals kann beispielsweise mit der sogenannten 6-TorSchaltung erfolgen.

Die Aufgabe der vorliegenden Erfindung besteht darin, einen Winkelsensor zu schaffen, der auf einfache und zuverlässige Weise mit hoher Genauigkeit eine Ermittlung der Drehstellung des Drehelements des Winkelsensors ermöglicht.

Die Aufgabe wird durch einen Winkelsensor mit den Merkmalen des Anspruchs 1 gelöst. Vorteilhafte Ausgestaltungen des Winkelsensors sind Gegenstand der abhängigen Ansprüche 2 bis 10.

Erfindungsgemäß wird ein Winkelsensor der eingangs genannten Art dadurch ausgestaltet,

- dass der Winkelsensor eine erste Anregungsschaltung aufweist, die ein erstes Anregungssignal generiert,
- dass der Winkelsensor eine erste Teilerschaltung aufweist, die das von der ersten Anregungsschaltung generierte erste Anregungssignal teilweise als erstes Sendesignal einer am Grundkörper befestigten ersten Sende- und Empfangsantenne und teilweise als erstes Basissignal einer Auswertungsschaltung des Winkelsensors zuführt,
- dass der Winkelsensor einen ersten Hohlleiter aufweist, der ringförmig um die Drehachse umläuft,

- dass die erste Sende- und Empfangsantenne aufgrund des ihr zugeführten ersten Sendesignals in den ersten Hohlleiter eine erste elektromagnetische Welle emittiert, die sich daraufhin in dem ersten Hohlleiter in beide Richtungen ausbreitet,
- dass das Drehelement an einer Stelle entlang seines Umfangs ein erstes Abschlusselement aufweist, das in den ersten Hohlleiter hineinragt,
- dass das erste Abschlusselement zumindest einseitig reflektierend ausgebildet ist, so dass auf der reflektierenden Seite des ersten Abschlusselements die dort eintreffende erste elektromagnetische Welle reflektiert wird und im ersten Hohlleiter zur ersten Sende- und Empfangsantenne zurückläuft,
- dass die reflektierte erste elektromagnetische Welle von der ersten Sende- und Empfangsantenne empfangen wird und ein dadurch generiertes erstes Empfangssignal der Auswertungsschaltung zugeführt wird und
- dass die Auswertungsschaltung durch Auswerten des ihr zugeführten ersten Basissignals und des ersten Empfangssignals innerhalb eines ersten Auflösungsbereichs eine erste Drehstellung des Drehelements relativ zu einer Referenzdrehstellung ermittelt.

Es wird also im Kern ein linearer Wegsensor der Art, wie er beispielsweise aus der DE 10 2013 202 765 A1 bekannt ist, derart modifiziert, dass er als Winkelsensor arbeitet. Zu diesem Zweck wird der bei der DE 10 2013 202 765 A1 lineare Hohlleiter kreisförmig ausgebildet. Das Variieren des Abstands zwischen dem Abschlusselement und der Sende- und Empfangsantenne erfolgt durch Drehen des Hohlleiters um die Drehachse, wobei die Sende- und Empfangsantenne ihren Ort am Grundkörper nicht verändert.

Es ist möglich, dass der erste Hohlleiter am Grundkörper befestigt ist. In diesem Fall verschiebt sich das erste Abschlusselement beim Drehen des Drehelements im ersten Hohlleiter. Vorzugsweise aber ist der erste Hohlleiter am Drehelement angeordnet. Dadurch ist es möglich, dass das erste Abschlusselement in dem ersten Hohlleiter fixiert ist. In diesem Fall weist der erste Hohlleiter einen ringförmig um die Drehachse umlaufenden ersten Schlitz auf und ist die erste Sende- und Empfangsantenne derart am Grundkörper angeordnet, dass sie in den ersten Schlitz hineinragt. Dadurch wird eine besonders gute Ankopplung der ersten Sende- und Empfangsantenne an den ersten Hohlleiter bewirkt.

Vorzugsweise ist das erste Abschlusselement an seiner der reflektierenden Seite des ersten Abschlusselements gegenüberliegenden Seite absorbierend ausgebildet. Dadurch ist es möglich, bei nahezu jeder Drehstellung die reflektierte erste elektromagnetische Welle ordnungsgemäß zu erfassen. Wenn hingegen das erste Abschlusselement auch an seiner der reflektierenden Seite des ersten Abschlusselements gegenüberliegenden Seite reflektierend ausgebildet ist, ist dies nur bei einigen wenigen Winkelstellungen möglich. In manchen Fällen kann jedoch auch dies ausreichen.

Die Auswertungsschaltung kann bezüglich der Auswertung des ersten Basissignals und des ersten Empfangssignals insbesondere als nach dem 6-Tor-Verfahren arbeitende Schaltung ausgebildet sein. In diesem Fall ist eine sehr einfache hochgenaue Ermittlung des Phasenversatzes zwischen dem ersten Basissignal und dem ersten Empfangssignal und hiermit korrespondierend eine sehr einfache hochgenaue Ermittlung der zugehörigen ersten Drehstellung möglich.

Das 6-Tor-Verfahren und die zugehörige Schaltung sind als solche allgemein bekannt. Es kann - rein beispielsweise - auf folgende Fachaufsätze verwiesen werden:

- "Six-Port Technology for Precise Geometrical Measurement Applications - an Overview " von Alexander Koelpin et al., veröffentlicht in den Proceedings zur 43rd European Microwave Conference, 7-10 October 2013, Nürnberg, Deutschland,
- "Wide-Range, Dual Six-Port based Direction-Of-Arrival Detector" von Gabor Vinci et al., The 7th German Microwave Conference (GeMiC), Ilmenau 2012, Seiten 1 bis 4, und
- "Dual Tone Approach for Unambiguous Six-Port Based Interferometric Distance Measurements" von S. Lindner et al., Microwave Symposium Digest, Seattle 2013 IEEE MTTS International.

Der erste Auflösungsbereich ist derjenige Winkelbereich, in dem die Drehstellung des Drehelements relativ zur Referenzdrehstellung durch Auswerten ausschließlich des ersten Basissignal und des ersten Empfangssignals ermittelt werden kann. Der erste Auflösungsbereich ergibt sich aus der Frequenz des ersten Anregungssignals bzw. der korrespondierenden Wellenlänge in Verbindung mit dem Abstand des ersten Hohlleiters von der Drehachse. Es ist möglich, dass der erste Auflösungsbereich sich über mindestens 360° erstreckt. In manchen Fällen - insbesondere bei der Regelung elektrischer Maschinen - kann es jedoch alternativ ausreichend sein, dass der erste Auflösungsbereich sich über - in diesem Fall exakt - 360°/n erstreckt, wobei n eine natürliche Zahl oberhalb von 1 ist.

In anderen Fällen Fällen ist es - unabhängig von der Erstreckung des ersten Auflösungsbereichs als solchem - erforderlich, eine resultierende Drehstellung über einen resultierenden Auflösungsbereich zu ermitteln, der größer als der erste Auflösungsbereich ist. Im einfachsten Fall kann dies dadurch erreicht werden, dass während des Drehens des Drehelements Phasenüberläufe erfasst werden und mitgezählt werden. Es sind jedoch auch andere Wege gangbar.

Beispielsweise ist es möglich,

- dass der Winkelsensor eine zweite Anregungsschaltung aufweist, die ein zweites Anregungssignal generiert,
- dass der Winkelsensor eine zweite Teilerschaltung aufweist, die das von der zweiten Anregungsschaltung generierte zweite Anregungssignal teilweise als zweites Sendesignal einer am Grundkörper befestigten zweiten Sende- und Empfangsantenne und teilweise als zweites Basissignal der Auswertungsschaltung zuführt,
- dass der Winkelsensor einen zweiten Hohlleiter aufweist, der ringförmig um die Drehachse umläuft,
- dass die zweite Sende- und Empfangsantenne aufgrund des ihr zugeführten zweiten Sendesignals in den zweiten Hohlleiter eine zweite elektromagnetische Welle emittiert, die sich daraufhin in dem zweiten Hohlleiter in beide Richtungen ausbreitet,
- dass das Drehelement ein zweites Abschlusselement aufweist, das in den zweiten Hohlleiter hineinragt,
- dass das zweite Abschlusselement zumindest einseitig reflektierend ausgebildet ist, so dass auf der reflektierenden Seite des zweiten Abschlusselements die dort eintreffende zweite elektromagnetische Welle reflektiert wird und im zweiten Hohlleiter zur zweiten Sende- und Empfangsantenne zurückläuft,
- dass die reflektierte zweite elektromagnetische Welle von der zweiten Sende- und Empfangsantenne empfangen wird und ein dadurch generiertes zweites Empfangssignal der Auswertungsschaltung zugeführt wird,
- dass die Auswertungsschaltung durch Auswerten des ihr zugeführten zweiten Basissignals und des zweiten Empfangssignals innerhalb eines zweiten Auflösungsbereichs eine zweite Drehstellung des Drehelements relativ zu der Referenzdrehstellung ermittelt und
- dass die Auswertungsschaltung anhand der ersten und der zweiten Drehstellung innerhalb eines resultierenden Auflösungsbereichs eine resultierende Drehstellung des Drehelements ermittelt.

Es ist möglich, dass der zweite Hohlleiter am Grundkörper befestigt ist. Vorzugsweise aber ist der zweite Hohlleiter am Drehelement angeordnet. Die obenstehenden Ausführungen zum ersten Hohlleiter sind in analoger Weise anwendbar.

In Einzelfällen können die zweite Sende- und Empfangsantenne und der zweite Hohlleiter mit der ersten Sende- und Empfangsantenne und dem ersten Hohlleiter identisch sein. In diesem Fall müssen sich zwangsweise die Frequenzen der beiden Anregungssignale voneinander unterscheiden. Es ist auch möglich, dass zwar die zweite Sende- und Empfangsantenne eine von der ersten Sende- und Empfangsantenne verschiedene Antenne ist, der zweite Hohlleiter jedoch mit dem ersten Hohlleiter identisch ist. Auch in diesem Fall müssen sich zwangsweise die Frequenzen der beiden Anregungssignale voneinander unterscheiden. In der Regel sind die zweite Sende- und Empfangsantenne und der zweite Hohlleiter von der ersten Sende- und Empfangsantenne und dem ersten Hohlleiter verschiedene Elemente. Auch in diesem Fall unterscheiden sich vorzugsweise die Frequenzen der beiden Anregungssignale voneinander. Zwingend ist dies in diesem Fall jedoch nicht erforderlich.

Durch diese Ausgestaltung (voneinander verschiedene Hohlleiter und voneinander verschiedene Sende- und Empfangsantennen) sind verschiedene Vorteile erreichbar. Insbesondere ist es möglich, dass in Umfangsrichtung um die Drehachse herum gesehen die erste und die zweite Sende- und Empfangsantenne auf dem Grundkörper und das erste und das zweite Abschlusselement auf dem Drehelement derart angeordnet sind, dass dann, wenn sich das erste Abschlusselement im Bereich der ersten Sendeund Empfangsantenne befindet, sich das zweite Abschlusselement nicht im Bereich der zweiten Sende- und Empfangsantenne befindet.

Dadurch wird folgendes Problem behoben: Bei Verwendung nur eines einzigen Hohlleiters und nur einem einzigen Abschlusselement existiert ein kleiner Winkelbereich, in dem die Sensoranordnung nicht ordnungsgemäß arbeitet. Dies ist derjenige Winkelbereich, innerhalb dessen sich das erste Abschlusselement im Bereich der ersten Sende- und Empfangsantenne befindet. Wenn nun aber eine weitere Sende- und Empfangsantenne verwendet wird, existiert auch bezüglich dieser weiteren Sende- und Empfangsantenne ein kleiner Winkelbereich, in dem die Sensoranordnung nicht ordnungsgemäß arbeitet. Es ist aber ohne weiteres möglich, die beiden Sende- und Empfangsantennen derart anzuordnen, dass dann, wenn die eine Sensoranordnung nicht ordnungsgemäß arbeitet, die andere Sensoranordnung ordnungsgemäß arbeitet und umgekehrt. Genau dies kann durch die obenstehende Ausgestaltung erreicht werden.

Weiterhin ist es möglich und auch bevorzugt, dass das zweite Anregungssignal eine von einer Frequenz des ersten Anregungssignals verschiedene Frequenz aufweist. Dadurch kann der resultierende Auflösungsbereich vergrößert werden, oftmals sogar deutlich vergrößert werden. Er kann sogar so weit vergrößert werden, dass der resultierende Auflösungsbereich sich über mindestens 360° erstreckt. Die entsprechenden Prinzipien zur Meßbereichserweiterung sind als solche für lineare Wegmesssysteme bekannt. Es kann auf den bereits erwähnten Fachaufsatz "Dual Tone Approach for Unambiguous Six-Port Based Interferometric Distance Measurements" von S. Lindner et al. verwiesen werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Maschine mit einem Winkelsensor,
FIG 2    den Winkelsensor von FIG 1 vergrößert,
FIG 3    ein Drehelement des Winkelsensors von FIG 2 von der Seite,
FIG 4    das Drehelement von FIG 3 von vorne,
FIG 5    eine zugehörige Schaltungsanordnung des Winkelsensors,
FIG 6    eine Ausgestaltung des Drehelements von FIG 3 von vorne und
FIG 7    eine zugehörige Schaltungsanordnung des Winkelsensors.

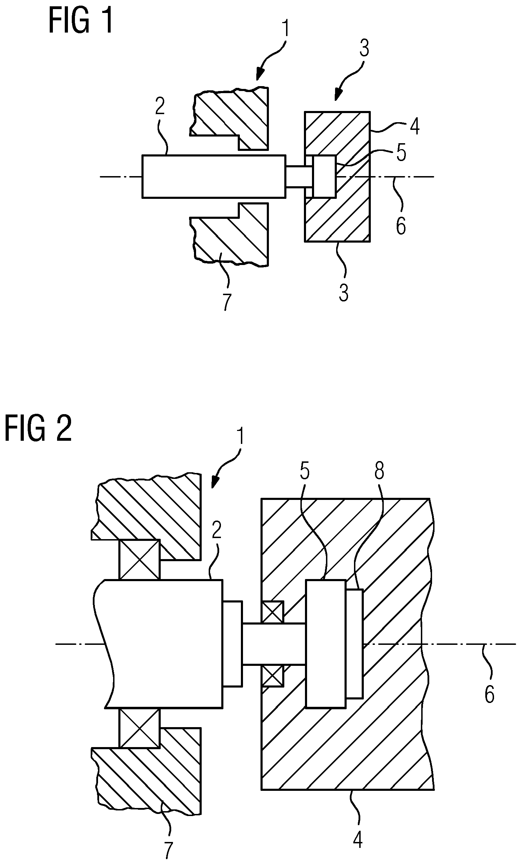

Gemäß FIG 1 weist eine Maschine 1 eine Welle 2 auf, deren Drehwinkel bzw. Drehstellung α erfasst werden soll. Zu diesem Zweck ist ein Winkelsensor 3 vorhanden. Der Winkelsensor 3 weist gemäß den FIG 1 und 2 einen Grundkörper 4 auf, in dem ein Drehelement 5 gelagert ist. Das Drehelement 5 ist dadurch um eine Drehachse 6 rotierbar. Der Grundkörper 4 kann - beispielsweise über Schrauben - mit einem Gehäuse 7 der Maschine 1 verbunden werden. Das Drehelement 5 kann - beispielsweise ebenfalls über Schrauben - mit der Welle 2 der Maschine 1 verbunden werden. Die Verbindung des Drehelements 5 mit der Welle 2 der Maschine 1 erfolgt derart, dass die Drehachse 6 so gut wie möglich mit der Drehachse der Welle 2 der Maschine 1 übereinstimmt. Zur Klarstellung wird darauf hingewiesen, dass der Begriff "Welle" in Bezug auf die Welle 2 der Maschine 1 im Sinne des mechanischen Elements verwendet wird, nicht im Sinne einer sich ausbreitenden Schwingung.

Soweit nachfolgend die Begriffe "axial", "radial" und "tangential" verwendet werden, sind sie stets auf die Drehachse 6 bezogen. "Axial" ist eine Richtung parallel zur Drehachse 6. "Radial" ist eine Richtung orthogonal zur Drehachse 6 direkt auf die Drehachse 6 zu bzw. von ihr weg. "Tangential" ist eine Richtung, die sowohl orthogonal zur Axialrichtung als auch orthogonal zur Radialrichtung verläuft. "Tangential" ist also eine Richtung, die bei einer konstanten Axialposition und mit einem konstanten radialen Abstand kreisförmig um die Drehachse 6 herum gerichtet ist.

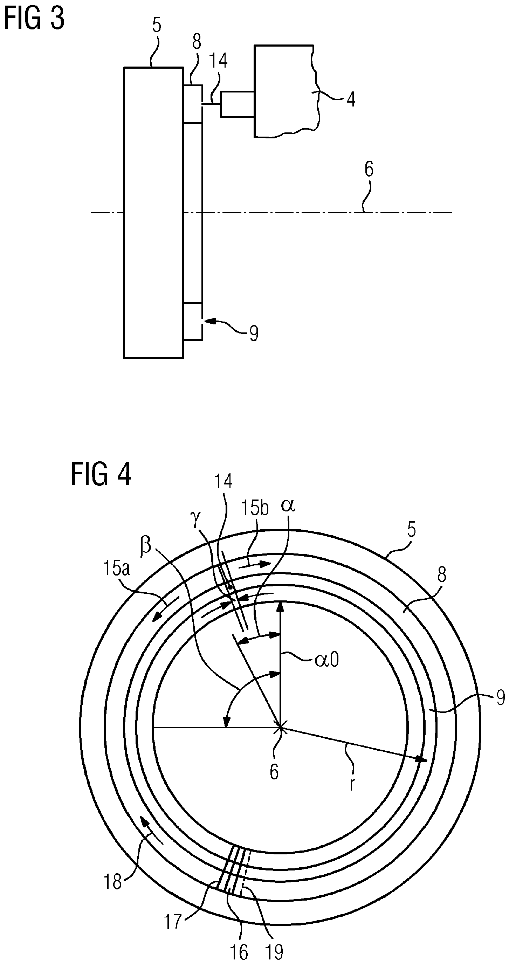

Der Winkelsensor 3 weist einen Hohlleiter 8 auf. Der Hohlleiter 8 läuft ringförmig um die Drehachse 6 um. Er bildet also einen geschlossenen, vollständig um 360° umlaufenden Ring. Der Hohlleiter 8 ist weiterhin vorzugsweise auf dem Drehelement 5 angeordnet. In diesem Fall weist der Hohlleiter 8 einen ringförmig um die Drehachse 6 umlaufenden Schlitz 9 auf. Auch der Schlitz 9 läuft vollständig um die Drehachse 6 um. Er ist also nirgends unterbrochen. Der Schlitz 9 kann entsprechend der Darstellung in den FIG 3 und 4 derart angeordnet sein, dass er in Axialrichtung der Drehachse 6 offen ist. Alternativ kann er in Radialrichtung der Drehachse 6 offen sein. Auch andere Richtungen sind möglich.

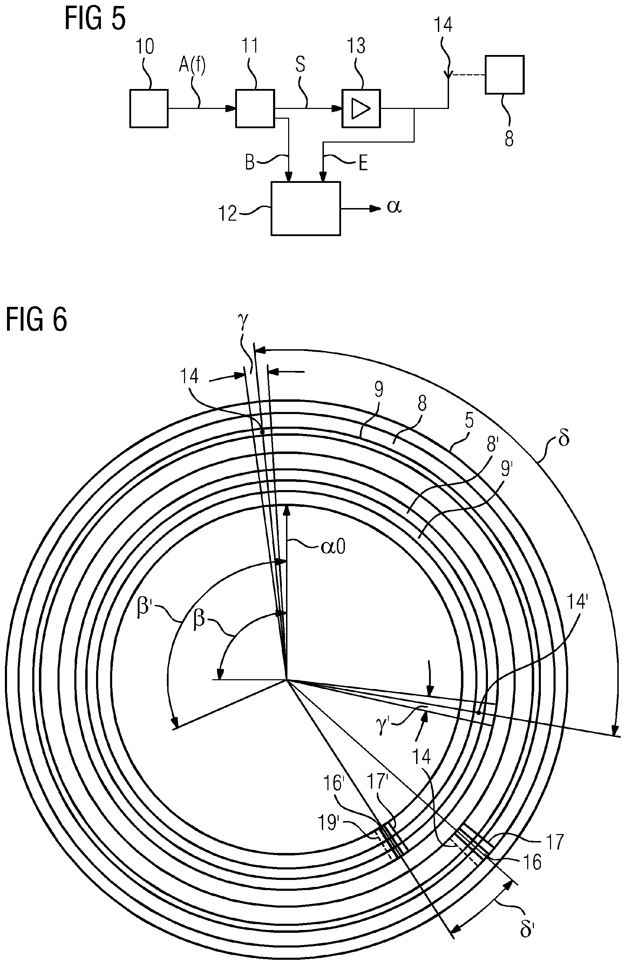

Um die Drehstellung α zu erfassen, weist der Winkelsensor 3 entsprechend der Darstellung in FIG 5 eine Anregungsschaltung 10 auf. Die Anregungsschaltung 10 generiert ein Anregungssignal A. Das Anregungssignal A weist eine Frequenz f auf. Die Frequenz f liegt im Hochfrequenzbereich, meist oberhalb von 1 GHz, oftmals sogar oberhalb von 10 GHz, beispielsweise bei 12, 24 oder 60 GHz. Sie kann fest vorgegeben oder einstellbar sein. In jedem Fall aber ist ihr genauer Wert zu jedem Zeitpunkt bekannt. Entsprechende Ausgestaltungen, welche das Anregungssignal A hochgenau mit der Frequenz f generieren können, sind Fachleuten beispielsweise in Form von PLLs (Phase Locked Loop) in Kombination mit VCOs (Voltage Controlled Oscillator) und anderen Ausgestaltungen bekannt.

Das generierte Anregungssignal A wird einer Teilerschaltung 11 zugeführt. Die Teilerschaltung 11 teilt das Anregungssignal A in zwei Signale auf, nämlich zum einen in ein Sendesignal S und zum anderen in ein Basissignal B. Die Teilerschaltung 11 führt das Basissignal B einer Auswertungsschaltung 12 zu. Das Sendesignal S führt die Teilerschaltung 11 - gegebenenfalls über einen Verstärker 13 - einer Sende- und Empfangsantenne 14 zu. Die Sende- und Empfangsantenne 14 ist am Grundkörper 4 angeordnet. Die Sende- und Empfangsantenne 14 emittiert aufgrund des ihr zugeführten Sendesignals S in den Hohlleiter 8 eine elektromagnetische Welle. Um die elektromagnetische Welle in den Hohlleiter 8 einkoppeln zu können, kann die Sende- und Empfangsantenne 14 beispielsweise entsprechend der Darstellung in FIG 3 in den Schlitz 9 hineinragen. Zur Klarstellung wird darauf hingewiesen, dass der Begriff "Welle" in Bezug auf die elektromagnetische Welle im Sinne einer sich ausbreitenden Schwingung verwendet wird, nicht im Sinne eines mechanischen Elements.

Die elektromagnetische Welle breitet sich in dem Hohlleiter 8 in beiden Richtungen aus. Dies ist in FIG 4 durch Pfeile 15a, 15b dargestellt, welche die entsprechenden Wellen bezeichnen.

Das Drehelement 5 weist ein Abschlusselement 16 auf. Das Abschlusselements 16 ragt in den Hohlleiter 8 hinein. Die beiden sich ausbreitenden Wellen 15a, 15b treffen auf die beiden Seiten des Abschlusselements 16 auf. Das Abschlusselement 16 ist zumindest auf einer Seite reflektierend ausgebildet. Dies ist in FIG 4 durch eine durchgezogene Linie 17 angedeutet.

Die auf der reflektierenden Seite des Abschlusselements 16 eintreffende elektromagnetische Welle 15a wird daher am Abschlusselement 16 reflektiert und läuft daraufhin als reflektierte Welle 18 im Hohlleiter 8 zur Sende- und Empfangsantenne 14 zurück. An der anderen Seite ist das Abschlusselement 16 vorzugsweise absorbierend ausgebildet. Dies ist in FIG 4 durch eine gestrichelte Linie 19 angedeutet. Die auf der absorbierenden Seite des Abschlusselements 16 eintreffende elektromagnetische Welle 15b wird daher am Abschlusselement 16 absorbiert, so dass von dort keine reflektierte Welle zur Sende- und Empfangsantenne 14 zurückläuft.

Die Sende- und Empfangsantenne 14 empfängt die reflektierte elektromagnetische Welle 18. Sie generiert dadurch ein Empfangssignal E, das sie der Auswertungsschaltung 12 zuführt. Die Auswertungsschaltung 12 ermittelt sodann durch Auswerten des Basissignals B und des Empfangssignals E die Drehstellung α. Insbesondere kann die Auswertungsschaltung 12 die Phasenlage φ des Empfangssignals E relativ zum Basissignal B ermitteln und daraus in Verbindung mit dem bekannten Radius r des Hohlleiters 8 die zugehörige Drehstellung α ermitteln. Dies wird nachstehend näher erläutert.

Das Empfangssignal E weist relativ zum Basissignal B einen Phasenoffset auf, wenn die Drehstellung α des Drehelements 5 gleich einer Referenzdrehstellung a0 ist. Ohne Beschränkung der Allgemeinheit kann angenommen werden, dass der Phasenoffset den Wert 0 aufweist. Wenn nun das Drehelement 5 um den Winkel α gedreht wird, ändert sich der Weg, den die sich ausbreitende Welle 15a und die reflektierte Welle 18 zurücklegen müssen, um

$$\delta x = r \cdot 2\pi \cdot \frac{\alpha}{360°} \tag{1}$$

Da dieser Weg sowohl von der sich ausbreitenden als auch von der reflektierten Welle 15a, 18 zurückgelegt werden muss, ergibt sich somit ein Phasenversatz φ (bzw. allgemein eine Änderung des Phasenversatzes φ) von

$$\varphi = \frac{2\delta x}{\lambda} \cdot 2\pi \tag{2}$$

Da weiterhin die Wellenlänge λ über die Beziehung

$$\lambda \cdot f = c \tag{3}$$

(mit c = Ausbreitungsgeschwindigkeit der Wellen 15a, 15b, 18) miteinander gekoppelt sind, kann somit im Ergebnis folgende Beziehung zwischen der Drehstellung α und der Phasenlage φ aufgestellt werden:

$$\varphi = \frac{\pi^2}{45°} \cdot \frac{f \cdot r}{c} \cdot \alpha \tag{4}$$

Bei gegebener Drehstellung α ist somit die Phasenlage φ eindeutig bestimmt. Die Auswertungsschaltung 12 muss jedoch zuerst die Phasenlage φ und sodann aus der Phasenlage φ die Drehstellung α ermitteln. Das Ermitteln der Phasenlage φ ist problemlos möglich. Beispielsweise kann die Auswertungsschaltung 12 zum Ermitteln der Phasenlage φ als nach dem 6-Tor-Verfahren arbeitende Schaltung ausgebildet sein. Diese Art der Auswertung ist allgemein bekannt. Sie ist sehr zuverlässig und genau. Die Phasenlage φ kann jedoch nur modulo 2n bestimmt werden. Die Auswertungsschaltung 12 kann die Drehstellung α des Drehelements 5 relativ zur Referenzdrehstellung a0 somit nur innerhalb eines Auflösungsbereichs β ermitteln. Der Auflösungsbereich β ergibt sich gemäß Gleichung 5 zu

$$\beta = \frac{90°}{\pi} \cdot \frac{c}{f \cdot r} \tag{5}$$

Es ist möglich, dass der erste Auflösungsbereich β sich über mindestens 360° erstreckt. Dies ist dann der Fall, wenn die Frequenz f und der Radius r derart aufeinander abgestimmt sind, dass sie die Beziehung

$$f \cdot r \le \frac{c}{4\pi} \tag{6}$$

erfüllen. Anderenfalls ist die Drehstellung α über eine volle Umdrehung des Drehelements 5 mittels der Ausgestaltung des Winkelsensors 3 gemäß den FIG 2, 3 und 4 nicht direkt möglich. Bei hinreichend schneller Erfassung und Ermittlung aufeinanderfolgender Phasenlagen φ ist es aber möglich, Phasensprünge zu erkennen und dadurch den Auflösungsbereich prinzipiell beliebig zu erweitern. Weiterhin ist es möglich, die Messung der Phasenlage φ schnell nacheinander

bei mehreren Frequenzen f durchzuführen und durch Kombination der Messwerte den Auflösungsbereich β - prinzipiell beliebig - zu erweitern.

In manchen Fällen - insbesondere dann, wenn die Maschine 1 eine elektrische Maschine ist - kann es weiterhin ausreichen, wenn der Auflösungsbereich β sich über 360°/n erstreckt, wobei n eine natürliche Zahl oberhalb von 1 ist. In diesem Fall müssen die Frequenz f und der Radius r derart aufeinander abgestimmt sein, dass sie die Beziehung

$$f \cdot r = n \cdot \frac{c}{4\pi} \qquad\qquad (7)$$

erfüllen. n kann insbesondere die Polpaarzahl der elektrischen Maschine sein.

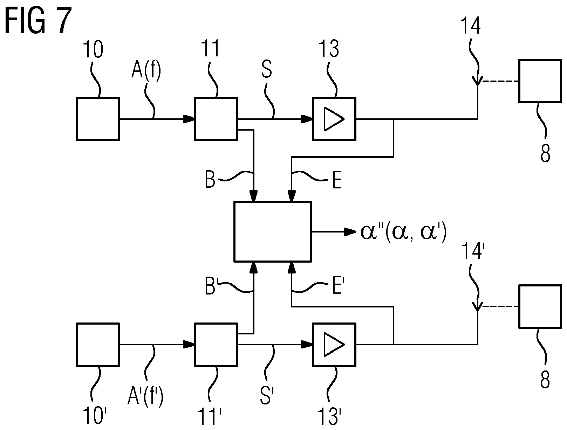

In Verbindung mit den FIG 6 und 7 wird nachfolgend eine Ausgestaltung des Winkelsensors 3 erläutert. Die Ausgestaltung geht aus von den FIG 4 und 5. Alle dort erwähnten Komponenten, beispielsweise der Hohlleiter 8 mit dem Schlitz 9 und die Anregungsschaltung 10, sind auch hier vorhanden. Die genannten Komponenten wirken auch auf die gleiche Art und Weise zusammen, wie dies obenstehend in Verbindung mit den FIG 4 und 5 erläutert wurde. Auf diese Sachverhalte wird daher nachstehend nicht nochmals eingegangen.

Zusätzlich weist der Winkelsensor 3 einen weiteren Hohlleiter 8' auf. Der weitere Hohlleiter 8' läuft ebenfalls ringförmig um die Drehachse 6 um. Er bildet also ebenfalls einen geschlossenen, vollständig um 360° umlaufenden Ring. Der weitere Hohlleiter 8' ist vorzugsweise ebenfalls auf dem Drehelement 5 angeordnet. In diesem Fall weist der weitere Hohlleiter 8' ebenfalls einen ringförmig (und vollständig) um die Drehachse 6 umlaufenden Schlitz 9' auf. Der Schlitz 9' des weiteren Hohlleiters 8' kann analog zum Schlitz 9 derart angeordnet sein, dass er in Axialrichtung der Drehachse 6 offen ist. Alternativ kann er in Radialrichtung der Drehachse 6 offen sein. Auch andere Richtungen sind möglich.

Weiterhin weist der Winkelsensor 3 entsprechend der Darstellung in FIG 7 zusätzlich eine weitere Anregungsschaltung 10' auf. Die weitere Anregungsschaltung 10' generiert ebenfalls ein Anregungssignal A'. Das weitere Anregungssignal A' weist eine Frequenz f' auf. Die Frequenz f' des weiteren Anregungssignals A' liegt ebenfalls im Hochfrequenzbereich, meist oberhalb von 1 GHz, oftmals sogar oberhalb von 10 GHz. Sie kann fest vorgegeben oder einstellbar sein. In jedem Fall aber ist ihr genauer Wert zu jedem Zeitpunkt bekannt. In aller Regel weist die Frequenz f' einen anderen Wert auf als die Frequenz f. Im übrigen sind die oben stehenden Ausführungen zur Anregungsschaltung 10 analog anwendbar.

Das generierte weitere Anregungssignal A' wird einer weiteren Teilerschaltung 11' zugeführt. Die weitere Teilerschaltung 11' teilt - analog zur Teilerschaltung 11 - das weitere Anregungssignal A' in ein weiteres Sendesignal S' und ein weiteres Basissignal B' auf. Die weitere Teilerschaltung 11' führt das weitere Basissignal B' der Auswertungsschaltung 12 zu. Das weitere Sendesignal S' führt die weitere Teilerschaltung 11' - gegebenenfalls über einen weiteren Verstärker 13' - einer weiteren Sende- und Empfangsantenne 14' zu. Die weitere Sende- und Empfangsantenne 14' ist ebenfalls am Grundkörper 4 angeordnet. Die weitere Sende- und Empfangsantenne 14' emittiert aufgrund des ihr zugeführten weiteren Sendesignals S' in den weiteren Hohlleiter 8' eine weitere elektromagnetische Welle. Um die weitere elektromagnetische Welle in den weiteren Hohlleiter 8' einkoppeln zu können, kann die weitere Sende- und Empfangsantenne 14' beispielsweise in den weiteren Schlitz 9' hineinragen.

Diese elektromagnetische Welle - also die über die weitere Sende- und Empfangsantenne 14' emittierte elektromagnetische Welle - breitet sich in dem weiteren Hohlleiter 8' in beiden Richtungen aus. Dies ist in FIG 6 durch Pfeile 15a', 15b' dargestellt, welche die entsprechenden Wellen bezeichnen.

Im Falle der Ausgestaltung gemäß den FIG 6 und 7 weist das Drehelement 5 an einer Stelle entlang seines Umfangs ein Abschlusselement 16' auf, das in den weiteren Hohlleiter 8' hineinragt. Das Abschlusselement 16' wird nachfolgend als weiteres Abschlusselement 16' bezeichnet. Die beiden sich ausbreitenden Wellen 15a', 15b' treffen auf die beiden Seiten des weiteren Abschlusselements 16' auf. Das weitere Abschlusselement 16' ist zumindest auf einer Seite reflektierend ausgebildet. Dies ist in FIG 6 durch eine durchgezogene Linie 17' angedeutet. Die auf der reflektierenden Seite des weiteren Abschlusselements 16' eintreffende elektromagnetische Welle 15a' wird daher am weiteren Abschlusselement 16' reflektiert und läuft daraufhin als reflektierte Welle 18' im weiteren Hohlleiter 8' zur weiteren Sende- und Empfangsantenne 14' zurück. An der anderen Seite ist das weitere Abschlusselement 16' vorzugsweise absorbierend ausgebildet. Dies ist in FIG 6 durch eine gestrichelte Linie 19' angedeutet. Die auf der absorbierenden Seite des weiteren Abschlusselements 16' eintreffende elektromagnetische Welle 15b' wird daher am weiteren Abschlusselement 16' absorbiert, so dass von dort keine reflektierte Welle zur weiteren Sende- und Empfangsantenne 14' zurückläuft.

Die weitere Sende- und Empfangsantenne 14' empfängt die reflektierte elektromagnetische Welle 18'. Sie generiert dadurch ein weiteres Empfangssignal E', das sie der Auswertungsschaltung 12 zuführt. Die Auswertungsschaltung 12 ermittelt sodann durch Auswerten des weiteren Basissignals B' und des weiteren Empfangssignals E' eine weitere Drehstellung α'. Die Auswertung ist völlig analog zur Auswertung, die obenstehend in Verbindung mit den FIG 4 und 5 erläutert wurde. Somit ermittelt die Auswertungsschaltung 12 eine Phasenlage φ' des weiteren Empfangssignals

E' relativ zum weiteren Basissignal B' und daraus in Verbindung mit dem bekannten Radius r' des weiteren Hohlleiters 8' die zugehörige weitere Drehstellung α'. Auch diese Ermittlung erfolgt in einem weiteren Auflösungsbereich β'.

Die Auswertung ist völlig analog wie oben in Verbindung mit den FIG 4 und 5 erläutert.

Die Ausgestaltung gemäß den FIG 6 und 7 bringt verschiedene Vorteile mit sich.

Ein Vorteil besteht darin, dass bei der Ausgestaltung gemäß den FIG 4 und 5 ein kleiner Winkelbereich γ existiert, in dem eine Erfassung der Drehstellung α nicht möglich ist. Dieser Winkelbereich γ besteht, weil die elektromagnetische Welle von der Sende- und Empfangsantenne 14 nicht in den Hohlleiter 8 emittiert werden kann, wenn das Abschlusselements 16 sich im Bereich der Sende- und Empfangsantenne 14 befindet. In analoger Weise existiert auch ein weiterer kleiner Winkelbereich γ', in dem eine Erfassung der weiteren Drehstellung α' nicht möglich ist. Es ist jedoch entsprechend der Darstellung in FIG 6 ohne weiteres möglich, die weitere Sende- und Empfangsantenne 14 auf dem Grundkörper 4 derart anzuordnen, dass dann, wenn sich das Abschlusselement 16 im Bereich der Sende-und Empfangsantenne 14 befindet, sich das weitere Abschlusselement 16' nicht im Bereich der weiteren Sende- und Empfangsantenne 14' befindet. Insbesondere ist es möglich, dass ein Winkelversatz δ, den die Sende- und Empfangsantenne 14 und die weitere Sende- und Empfangsantenne 14' relativ zueinander aufweisen, sich hinreichend von einem Winkelversatz δ' unterscheidet, den das Abschlusselement 16 und das weitere Abschlusselement 16' relativ zueinander aufweisen. Der Unterschied zwischen den Winkelversätzen δ, δ' muss insbesondere größer als der größere der beiden Winkelbereiche γ, γ' sein. Die beiden Winkelversätze δ, δ' sind auf die Drehachse 6 bezogen.

Ein weiterer Vorteil besteht darin, dass die Frequenzen f, f' sich voneinander unterscheiden können. Dadurch unterscheiden sich nicht nur die beiden ermittelten Phasenlagen φ, φ' voneinander, sondern insbesondere auch die einzelnen Auflösungsbereiche β, β'. Durch Vergleich der beiden ermittelten Drehstellungen α, α' miteinander kann die Auswertungsschaltung 12 daher - eine geeignete Wahl der Frequenzen f, f' und der zugehörigen Radien r, r' vorausgesetzt - ausgehend von den beiden ermittelten Phasenlagen φ, φ' und den zugehörigen Drehstellungen α, α' innerhalb eines resultierenden Auflösungsbereichs β" eine resultierende Drehstellung α" ermitteln. Der resultierende Auflösungsbereich β" kann sich ohne weiteres über mindestens 360° erstrecken. Das entsprechende Prinzip ist für Abstände insbesondere aus dem obenstehend erwähnten Fachaufsatz von S. Lindner bekannt. Die entsprechenden Prinzipien können direkt auf Winkelbereiche übertragen werden. Es ist möglich, dass die Radien r, r' den gleichen Wert aufweisen. In der Regel weisen die Radien r, r' jedoch voneinander verschiedene Werte auf.

Zusammengefasst betrifft die vorliegende Erfindung somit folgenden Sachverhalt:

In einem Grundkörper 4 ist ein Drehelement 5 gelagert, so dass das Drehelement 5 um eine Drehachse 6 rotierbar ist. Eine Anregungsschaltung 10 generiert ein Anregungssignal A. Eine Teilerschaltung 11 führt das Anregungssignal A teilweise als Sendesignal S einer am Grundkörper 4 befestigten Sendeund Empfangsantenne 14 und teilweise als Basissignal B einer Auswertungsschaltung 12 zu. Der Winkelsensor 3 weist einen Hohlleiter 8 auf, der ringförmig um die Drehachse 6 umläuft. Die Sende- und Empfangsantenne 14 emittiert aufgrund des Sendesignals S in den Hohlleiter 8 eine elektromagnetische Welle 15a, 15b, die sich in dem Hohlleiter 8 in beide Richtungen ausbreitet. Das Drehelement 5 weist ein Abschlusselement 16 auf, das in den Hohlleiter 8 hineinragt und zumindest einseitig reflektierend ausgebildet ist, so dass auf der reflektierenden Seite des Abschlusselements 16 die dort eintreffende elektromagnetische Welle 15a reflektiert wird und im Hohlleiter 8 zur Sende- und Empfangsantenne 14 zurückläuft. Die reflektierte Welle 18 wird von der Sende- und Empfangsantenne 14 empfangen. Ein dadurch generiertes Empfangssignal E wird der Auswertungsschaltung 12 zugeführt. Die Auswertungsschaltung 12 ermittelt durch Auswerten des Basissignals B und des Empfangssignals E innerhalb eines Auflösungsbereichs β eine Drehstellung α des Drehelements 5 relativ zu einer Referenzdrehstellung a0.

Die vorliegende Erfindung weist viele Vorteile auf. Insbesondere ist auf einfache und zuverlässige Weise eine hochgenaue Erfassung der Drehstellung α, α' des Drehelements 5 relativ zur Referenzdrehstellung a0 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.** Winkelsensor,

- wobei der Winkelsensor einen Grundkörper (4) aufweist,
- wobei in dem Grundkörper (4) ein Drehelement (5) gelagert ist, so dass das Drehelement (5) um eine Drehachse (6) rotierbar ist,

**dadurch gekennzeichnet,**

- **dass** der Winkelsensor eine erste Anregungsschaltung (10) aufweist, die ein erstes Anregungssignal (A) generiert,
- **dass** der Winkelsensor eine erste Teilerschaltung (11) aufweist, die das von der ersten Anregungsschaltung (10) generierte erste Anregungssignal (A) teilweise als erstes Sendesignal (S) einer am Grundkörper (4) befestigten ersten Sende- und Empfangsantenne (14) und teilweise als erstes Basissignal (B) einer Auswertungsschaltung (12) des Winkelsensors zuführt,
- **dass** der Winkelsensor einen ersten Hohlleiter (8) aufweist, der ringförmig um die Drehachse (6) umläuft,
- **dass** die erste Sende- und Empfangsantenne (14) aufgrund des ihr zugeführten ersten Sendesignals (S) in den ersten Hohlleiter (8) eine erste elektromagnetische Welle (15a, 15b) emittiert, die sich daraufhin in dem ersten Hohlleiter (8) in beide Richtungen ausbreitet,
- **dass** das Drehelement (5) ein erstes Abschlusselement (16) aufweist, das in den ersten Hohlleiter (8) hineinragt,
- **dass** das erste Abschlusselement (16) zumindest einseitig reflektierend ausgebildet ist, so dass auf der reflektierenden Seite des ersten Abschlusselements (16) die dort eintreffende erste elektromagnetische Welle (15a) reflektiert wird und im ersten Hohlleiter (8) zur ersten Sendeund Empfangsantenne (14) zurückläuft,
- **dass** die reflektierte erste elektromagnetische Welle (18) von der ersten Sende- und Empfangsantenne (14) empfangen wird und ein dadurch generiertes erstes Empfangssignal (E) der Auswertungsschaltung (12) zugeführt wird und
- **dass** die Auswertungsschaltung (12) durch Auswerten des ihr zugeführten ersten Basissignals (B) und des ersten Empfangssignals (E) innerhalb eines ersten Auflösungsbereichs (β) eine erste Drehstellung (α) des Drehelements (5) relativ zu einer Referenzdrehstellung (α0) ermittelt.

2. Winkelsensor nach Anspruch 1,
**dadurch gekennzeichnet,**
**dass** der erste Hohlleiter (8) am Drehelement (5) angeordnet ist, dass der erste Hohlleiter (8) einen ringförmig um die Drehachse (6) umlaufenden ersten Schlitz (9) aufweist und dass die erste Sende- und Empfangsantenne (14) derart am Grundkörper (4) angeordnet ist, dass sie in den ersten Schlitz (9) hineinragt.

3. Winkelsensor nach Anspruch 1 oder 2,
**dadurch gekennzeichnet,**
**dass** das erste Abschlusselement (16) an seiner der reflektierenden Seite des ersten Abschlusselements (16) gegenüberliegenden Seite absorbierend ausgebildet ist.

4. Winkelsensor nach Anspruch 1, 2 oder 3,
**dadurch gekennzeichnet,**
**dass** die Auswertungsschaltung (12) bezüglich der Auswertung des ersten Basissignals (B) und des ersten Empfangssignals (E) als nach dem 6-Tor-Verfahren arbeitende Schaltung ausgebildet ist.

5. Winkelsensor nach einem der Ansprüche 1 bis 4,
**dadurch gekennzeichnet,**
**dass** der erste Auflösungsbereich (β) sich über mindestens 360° erstreckt.

6. Winkelsensor nach einem der Ansprüche 1 bis 4,
**dadurch gekennzeichnet,**
**dass** der erste Auflösungsbereich (β) sich über 360°/n erstreckt, wobei n eine natürliche Zahl oberhalb von 1 ist.

7. Winkelsensor nach einem der obigen Ansprüche,
**dadurch gekennzeichnet,**

- **dass** der Winkelsensor eine zweite Anregungsschaltung (10') aufweist, die ein zweites Anregungssignal (A') generiert,
- **dass** der Winkelsensor eine zweite Teilerschaltung (11') aufweist, die das von der zweiten Anregungsschaltung (10') generierte zweite Anregungssignal (A') teilweise als zweites Sendesignal (S') einer am Grundkörper (4) befestigten zweiten Sende- und Empfangsantenne (14') und teilweise als zweites Basissignal (B') der Auswertungsschaltung (12) zuführt,
- **dass** der Winkelsensor einen zweiten Hohlleiter (8') aufweist, der ringförmig um die Drehachse (6) umläuft,
- **dass** die zweite Sende- und Empfangsantenne (14') aufgrund des ihr zugeführten zweiten Sendesignals (S') in den zweiten Hohlleiter (8') eine zweite elektromagnetische Welle (15a', 15b') emittiert, die sich daraufhin in dem zweiten Hohlleiter (8') in beide Richtungen ausbreitet,

- **dass** das Drehelement (5) ein zweites Abschlusselement (16') aufweist, das in den zweiten Hohlleiter (8') hineinragt,

- **dass** das zweite Abschlusselement (16') zumindest einseitig reflektierend ausgebildet ist, so dass auf der reflektierenden Seite des zweiten Abschlusselements (16') die dort eintreffende zweite elektromagnetische Welle (15a') reflektiert wird und im zweiten Hohlleiter (8') zur zweiten Sende- und Empfangsantenne (14') zurückläuft,

- **dass** die reflektierte zweite elektromagnetische Welle (18') von der zweiten Sende- und Empfangsantenne (14') empfangen wird und ein dadurch generiertes zweites Empfangssignal (E') der Auswertungsschaltung (12) zugeführt wird,

- **dass** die Auswertungsschaltung (12) durch Auswerten des ihr zugeführten zweiten Basissignals (B') und des zweiten Empfangssignals (E') innerhalb eines zweiten Auflösungsbereichs ($\beta'$) eine zweite Drehstellung ($\alpha'$) des Drehelements (5) relativ zu der Referenzdrehstellung (a0) ermittelt und

- **dass** die Auswertungsschaltung (12) anhand der ersten und der zweiten Drehstellung ($\alpha$, $\alpha'$) innerhalb eines resultierenden Auflösungsbereichs ($\beta''$) eine resultierende Drehstellung (a") des Drehelements (5) ermittelt.

8. Winkelsensor nach Anspruch 7,
   **dadurch gekennzeichnet,**
   **dass** in Umfangsrichtung um die Drehachse (6) herum gesehen die erste und die zweite Sende- und Empfangsantenne (14, 14') auf dem Grundkörper (5) und das erste und das zweite Abschlusselement (16, 16') auf dem Drehelement (5) derart angeordnet sind, dass dann, wenn sich das erste Abschlusselement (16) im Bereich der ersten Sende- und Empfangsantenne (14) befindet, sich das zweite Abschlusselement (16') nicht im Bereich der zweiten Sende- und Empfangsantenne (14') befindet.

9. Winkelsensor nach Anspruch 7 oder 8,
   **dadurch gekennzeichnet,**
   **dass** das zweite Anregungssignal (A') eine von einer Frequenz (f) des ersten Anregungssignals (A) verschiedene Frequenz (f') aufweist.

10. Winkelsensor nach Anspruch 7, 8 oder 9,
    **dadurch gekennzeichnet,**
    **dass** der resultierende Auflösungsbereich (ß") sich über mindestens 360° erstreckt.

FIG 1

FIG 2

FIG 3

FIG 4

# FIG 5

10
A(f)
11
S
13
14
8

B
E

12
α

# FIG 6

γ
14
9
8
5
8'
9'
δ

α0

β'
β
14'

γ'
14

16'
17'
19'
17
16
δ'

## FIG 7

$$\alpha''(\alpha, \alpha')$$

Europäisches Patentamt
European Patent Office
Office européen des brevets

**EUROPÄISCHER RECHERCHENBERICHT**

Nummer der Anmeldung

EP 17 20 0617

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2013 202765 A1 (FRIEDRICH ALEXANDER UNIVERSITÄT ERLANGEN NÜRNBERG [DE]; SIEDLE HORST G) 21. August 2014 (2014-08-21) * Zusammenfassung, Beschr. [0012]-[0022], [0038], Fig. 1 * ----- | 1-10 | INV. G01D5/48 |
| A,D | DE 10 2013 209364 A1 (FRIEDRICH ALEXANDER UNIVERSITÄT ERLANGEN NÜRNBERG [DE]; SIEDLE HORST G) 27. November 2014 (2014-11-27) * Zusammenfassung, Beschr. [0014]-[0034], Fig. 1a * ----- | 1-10 | |
| A | GABOR VINCI ET AL: "Wide-range, dual six-port based Direction-Of-Arrival detector", MICROWAVE CONFERENCE (GEMIC), 2012 THE 7TH GERMAN, IEEE, 12. März 2012 (2012-03-12), Seiten 1-4, XP032169150, ISBN: 978-1-4577-2096-3 * Spalte 1-2 und Fig. 1 * ----- | 1-10 | |
| A | LINDNER S ET AL: "Dual tone approach for unambiguous six-port based interferometric distance measurements", IEEE - MTTS INTERNATIONAL MICROWAVE SYMPOSIUM. DIGEST, IEEE, US, 2. Juni 2013 (2013-06-02), Seiten 1-4, XP032546243, ISSN: 0149-645X, DOI: 10.1109/MWSYM.2013.6697581 [gefunden am 2013-12-27] * Spalte 1-3 und Fig. 1 * ----- | 1-10 | RECHERCHIERTE SACHGEBIETE (IPC) G01D |
| A | DE 10 2006 052790 A1 (FESTO AG & CO [DE]) 15. Mai 2008 (2008-05-15) * Zusammenfassung, Beschr. [0057]-[0074], Fig. 1 * ----- -/-- | 1-10 | |

Der vorliegende Recherchenbericht wurde für alle Patentansprüche erstellt

| Recherchenort | Abschlußdatum der Recherche | Prüfer |
|---|---|---|
| München | 10. April 2018 | Reim, Klaus |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 17 20 0617

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2006 021206 A1 (FESTO AG & CO [DE]) 15. November 2007 (2007-11-15) * Zusammenfassung, Beschr. [0044]-[0052], Fig. 1 * ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 10. April 2018 | Reim, Klaus |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
    Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 17 20 0617

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2018

| Im Recherchenbericht angeführtes Patentdokument | Datum der Veröffentlichung | Mitglied(er) der Patentfamilie | Datum der Veröffentlichung |
|---|---|---|---|
| DE 102013202765 A1 | 21-08-2014 | CN 103994738 A<br>DE 102013202765 A1<br>US 2014232417 A1 | 20-08-2014<br>21-08-2014<br>21-08-2014 |
| DE 102013209364 A1 | 27-11-2014 | CN 104181388 A<br>DE 102013209364 A1<br>US 2014347035 A1 | 03-12-2014<br>27-11-2014<br>27-11-2014 |
| DE 102006052790 A1 | 15-05-2008 | DE 102006052790 A1<br>EP 2078214 A1<br>WO 2008055590 A1 | 15-05-2008<br>15-07-2009<br>15-05-2008 |
| DE 102006021206 A1 | 15-11-2007 | CN 101460812 A<br>DE 102006021206 A1<br>EP 2016374 A2<br>WO 2007128387 A2 | 17-06-2009<br>15-11-2007<br>21-01-2009<br>15-11-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013209364 A1

- DE 102013202765 A1

**In der Beschreibung aufgeführte Nicht-Patentliteratur**

- **ALEXANDER KOELPIN et al.** Six-Port Technology for Precise Geometrical Measurement Applications - an Overview. *Proceedings zur 43rd European Microwave Conference,* 07. Oktober 2013
- **GABOR VINCI et al.** Wide-Range, Dual Six-Port based Direction-Of-Arrival Detector. *The 7th German Microwave Conference (GeMiC),* 2012, 1-4

- Dual Tone Approach for Unambiguous Six-Port Based Interferometric Distance Measurements. **S. LINDNER et al.** Microwave Symposium Digest. IEEE MTTS International, 2013
- **S. LINDNER.** *Dual Tone Approach for Unambiguous Six-Port Based Interferometric Distance Measurements*